# FASCICULE DE BREVET EUROPEEN

(11) **EP 2 724 004 B1**
(45) Date de publication et mention de la délivrance du brevet: **29.07.2015**
(21) Numéro de dépôt: 12733215.3
(22) Date de dépôt: 15.06.2012
(51) Int. Cl.: F02B 75/04, F02B 75/22, F16D 3/10, F16C 33/66

(54) **MOTEUR À COMBUSTION INTERNE AVEC TRANSMISSION À CALAGE VARIABLE**
VERBRENNUNGSMOTOR MIT STUFENLOSEM GETRIEBE
INTERNAL COMBUSTION ENGINE HAVING A VARIABLE TRANSMISSION

(30) Priorité: 24.06.2011 LU 91831
(43) Date de publication de la demande: 30.04.2014
(73) Titulaire: Van Avermaete, Gilbert Lucien Charles Henri Louis, 3333 Hellange (LU)
(72) Inventeur: Van Avermaete, Gilbert Lucien Charles Henri Louis, 3333 Hellange (LU)
(86) Numéro de dépôt international: PCT/IB2012/001193
(87) Numéro de publication internationale: WO 2012/176037

(56) Documents cités:
- WO-A1-2007/082355
- US-A- 4 334 720
- US-B1- 6 409 464

## Description

L'invention a pour objet un moteur à combustion interne du type décrit dans le document WO2007/082355.

Par le document WO2007/082355, on connaît un aménagement de la transmission à calage variable d'un moteur à rapport volumétrique variable pour perfectionner le dispositif de commande de l'angle de phase entre un premier et deuxième vilebrequins. Ce moyen est défini par une nouvelle forme d'espacement entre les deux vilebrequins, de manière à engendrer le débordement de l'accouplement de la transmission à calage variable à côté du volant du moteur. La commande de la transmission à calage variable est pourvue d'un vérin de pilotage en prise directe pour contrôler l'angle de phase entre le vilebrequin à petite course et le vilebrequin à grande course. Des moyens sont prévus pour permettre la réduction, voir de préférence la suppression des transferts d'efforts de couple moteur non régularisés par le petit vilebrequin sur la ligne d'arbre du grand vilebrequin. D'autres moyens sont aussi prévus dans le carter cylindre par une nouvelle disposition des deux cylindres groupés permettant de constituer à leur point mort haut une chambre de combustion commune à ces deux cylindres. Egalement, cette nouvelle disposition des deux cylindres groupés dans le carter cylindre autorise le désencombrement des deux attelages des deux vilebrequins, ce moyen permettant la standardisation de l'entraxe tête pied de bielle sur l'attelage du grand vilebrequin.

Ce document décrit une combinaison nouvelle d'un moteur à chambre de combustion à volume variable à quatre temps. Le moteur comprend avantageusement une chaîne cinématique où les arbres des deux vilebrequins sont accouplés à même vitesse de rotation au moyen de la transmission à calage variable. La course de décalage angulaire entre les deux vilebrequins réalisée entre le début et la fin de course de la transmission à calage variable est agencée par un rapport approprié entre les deux cylindrées des deux cylindres groupés et entre le volume de ces derniers et l'espace mort, ce qui permet de moduler le rapport volumétrique du moteur par le déplacement linéaire du piston du petit cylindre par rapport aux phases du moteur. Par définition, le principe de la suralimentation des moteurs à pistons est d'augmenter les masses d'air sans augmenter la cylindrée. Il en résulte pour les moteurs à taux de compression fixe une augmentation de la pression de combustion et une plus grande puissance volumétrique (puissance par litre de cylindrée). Cependant, quand la pression de suralimentation est augmentée, les contraintes d'efforts mécaniques et thermiques s'accroissent sur les organes du moteur. Cet inconvénient majeur provient du fait que le rapport volumétrique, engendré par la chambre de combustion et la course du piston, est non modifiable, ne pouvant s'adapter aux variations de pressions et températures de l'air d'admission et des vitesses et températures du moteur.
Dès lors, les motoristes respectent certaines règles de conception en déterminant, d'une part, une limite à l'amplitude des variations de pressions à l'admission, et d'autre part, en réalisant un rapport de compression moyen entre la pression d'aspiration atmosphérique et la pression de suralimentation. Comme la détermination du rapport de compression moyen est un compromis conciliant au mieux les différents régimes du moteur, le régime d'aspiration atmosphérique est situé à de trop basses pressions et températures, et le régime de pressions de suralimentation est situé à de trop hautes pressions et températures

L'invention a pour objet un moteur à combustion interne du type décrit dans le document WO2007/082355, à savoir un moteur à quatre temps comprenant au moins une phase d'aspiration, une phase de compression, une phase de détente et une phase d'échappement, ledit moteur fonctionnant par autoinflammation ou par allumage commandé comprenant:
- une pièce carter cylindre présentant une première série de cylindres (2) présentant chacun un axe et un diamètre et une deuxième série de cylindres (3) présentant chacun un axe et un diamètre, les cylindres (2) de la première série présentant une cylindrée et un diamètre plus grands que la cylindrée et le diamètre des cylindres (3) de la deuxième série, - des pistons (6,8), chaque piston étant adapté pour être animé d'un mouvement alternatif dans un cylindre et étant associé à une bielle,
- deux lignes d'arbres vilebrequins présentant des axes de rotation parallèles entre eux, une première ligne (4) présentant une manivelle avec une grande course, tandis que la deuxième ligne (5) présente une manivelle avec une petite course inférieure à la grande course de la manivelle de la première ligne d'arbre vilebrequin, lesdits arbres vilebrequins (4,5) étant adaptés pour être accouplés à même vitesse de rotation au moyen d'un train d'engrenages (14,16) et d'une transmission à calage variable (10);
   dans lequel chaque piston étant associé à une bielle (7,9) est opéré avec une manivelle d'un vilebrequin, la manivelle de petite course de la deuxième ligne d'arbre vilebrequin (5) opérant la bielle (9) du piston (8) se déplaçant dans le petit cylindre (3), tandis que la manivelle de grande course de la première ligne d'arbre vilebrequin (4) opère la bielle (7) du piston (6) se déplaçant dans le grand cylindre (2),
   dans lequel la première série de cylindres (2) est disposée au-dessus de la première ligne d'arbre vilebrequin (4), tandis que la deuxième série de cylindres (3) est disposée au-dessus de la deuxième ligne d'arbre vilebrequin (5), et dans lequel chaque cylindre (2) de la première série communique avec au moins un cylindre (3) de la deuxième série via un espace mort de manière à former un groupe de deux cylindres (2,3) communiquant entre eux pour permettre aux gaz de passer d'un cylindre à l'autre indépendamment de la position des pistons (6,8) se déplaçant dans lesdits cylindres (2,3).

Dans le moteur selon ce document, la pièce carter cylindre présente avantageusement une face le long de laquelle les cylindres sont ouverts avantageusement le long de la face du plan de joint de culasse, des canaux et passages étant formés dans la face du carter cylindre faisant face au plan de joint de la culasse pour former au moins un passage ou canal distinct pour chaque groupe de cylindre, un canal ou passage d'un groupe s'étendant entre un cylindre de la première série et un cylindre de la deuxième série, ledit canal présentant une largeur moyenne et/ou minimale (déterminée dans le plan de joint de culasse) comprise entre 0,25 et 2 fois, avantageusement entre 0,3 et 1 fois, de préférence entre 0,5 et 0,8 fois la moyenne des diamètres des cylindres reliés par le canal ou passage considéré.

La figure 4 de ce document représente une vue en plan du carter cylindre de la figure 3. On peut voir en perspective les 4 groupes de deux cylindres (2,3). Le crevé partiel permet de voir la transmission à calage variable (10) ainsi que les engrenages (14,16) des deux vilebrequins (4,5) sans les deux engrenages de liaison intermédiaires (non représentés). Les pistons (6,8) sont positionnés en phase d'échappement pour représenter les intervalles entre les deux attelages des vilebrequins (4,5) et les parois latérales du carter cylindre (1). On peut réaliser le dégagement entre la transmission à calage variable (10) et le volant du moteur (26) en fonction de l'ouverture angulaire des deux cylindres groupés (2,3) axés en forme de V inversé asymétrique située à 24 degrés. Les axes des cylindres (2,3) ne sont pas perpendiculaires au plan de joint de culasse. Par rapport à une droite perpendiculaire au plan de joint de culasse, l'axe du grand cylindre (2) est avantageusement moins incliné que l'axe du petit cylindre (3).
La figure 5 représente une vue en coupe parallèle à l'axe de la transmission à calage variable. On peut voir sur l'extrémité de l'arbre (12) les cannelures externes de la transmission à calage variable.
La figure 6 de ce document représente une vue en coupe partielle de la transmission à calage variable dont l'arbre d'accouplement (12) est intégré à l'arbre du vilebrequin à petite course (5).
La figure 7 de ce document est une vue en coupe et en perspective de la transmission à calage variable intégrée à l'arbre du vilebrequin à petite course où l'on peut distinguer les canaux de lubrification.

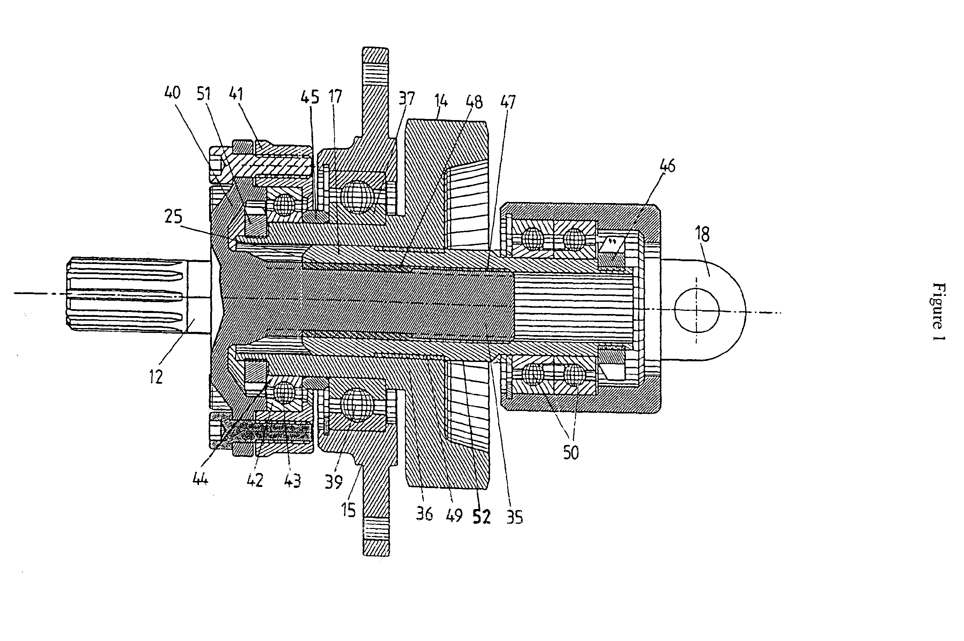

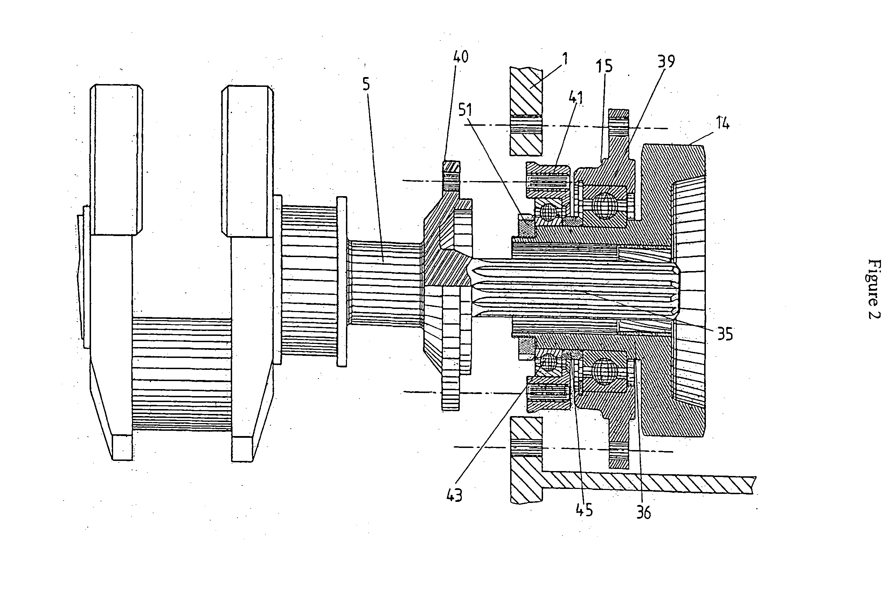

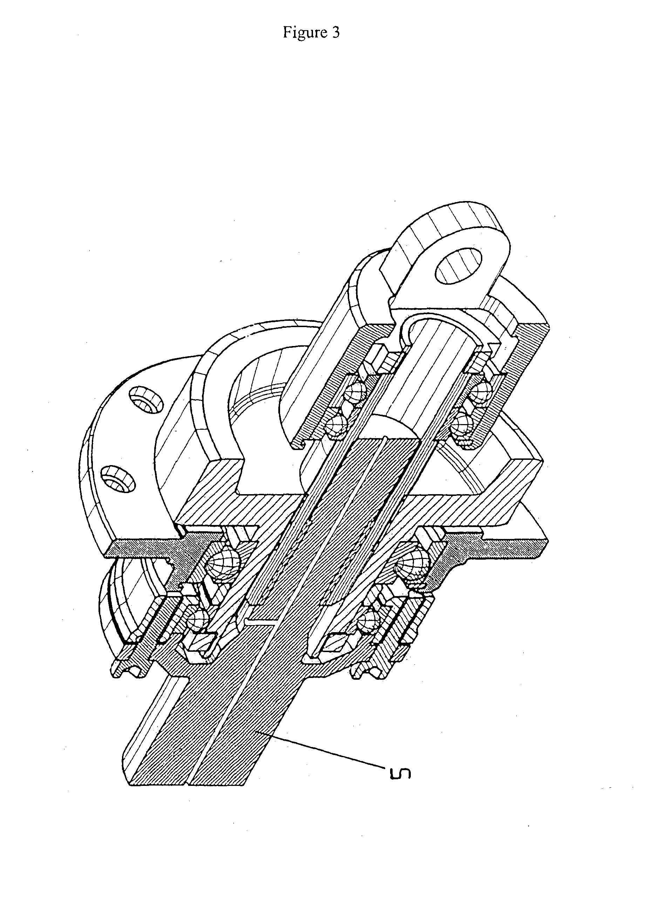

La transmission à calage variable (10) selon ce document (voir figures 1 à 3 ci-jointes, qui correspondent aux figures 5 à 7 du document WO2007/082355) est formée de trois éléments concentriques superposés: le premier élément est constitué par l'arbre de transmission (35) situé dans la partie interne, le deuxième élément est constitué par le manchon (36) de l'engrenage (14) situé dans la partie externe et le troisième élément est constitué par le tube coulissant (17) situé dans la partie intermédiaire entre les deux autres éléments précités. Le dit manchon (36) est maintenu dans un palier applique (15) au moyen d'un roulement (39) à une rangées approprié entre le palier applique (15) et le manchon (36). Le dit palier applique (15) est fixé au carter cylindre (1) de manière que la transmission à calage variable (10) puisse constituer un ensemble séparé de l'arbre (13) du vilebrequin à petite course (5). A cet effet, le vilebrequin à petite course (5) et la transmission à calage variable (10) sont réalisés en liaison avec leur arbre respectif (12) et (13). La transmission à calage variable (10) est dotée d'un palier applique (15) qui se fixe par centrage dans un orifice prévu dans le carter cylindre (1) Les cannelures droites internes de l'arbre (12) situées dans le tourillon du palier (20) sont appariées avec les cannelures droites externes de l'arbre (13), afin de présenter les qualités de rigidité suffisantes de l'axe de la transmission à calage variable et un encombrement réduit de l'accouplement entre les deux arbres (12,13) ; cette disposition permettant le démontage de la transmission à calage variable hors du bloc moteur (1) sans devoir procéder au démontage du vilebrequin à petite course (5).

On a remarqué maintenant que le fonctionnement de la transmission à calage variable de ce document peut être amélioré, avec moins de frottement, en particulier pendant de longues périodes de temps, permettant ainsi un contrôle optimal du taux de compression désiré en fonction par exemple du vérin de commande.

L'invention a donc pour objet un moteur à combustion interne à quatre temps comprenant au moins une phase d'aspiration, une phase de compression, une phase de détente et une phase d'échappement, ledit moteur fonctionnant par auto-inflammation ou par allumage commandé. Ce moteur du type décrit dans le document WO2007/082355 est caractérisé en ce que la transmission à calage variable (10) comporte un système de canaux et/ou de passages reliés directement et/ou indirectement au canal interne de l'arbre d'accouplement pour amener du lubrifiant à la bague interne (50) s'étendant entre la pièce d'attache (18) et le tube coulissant (17), ainsi que dans un ou des canaux s'étendant entre l'arbre d'accouplement et une partie du tube coulissant.

Des particularités de ce moteur sont données dans les revendications attachées au présent mémoire.

L'invention a également pour objet un engin ou appareil ou machine comportant au moins un moteur suivant l'invention, et encore une transmission à calage variable tel que définie dans l'une quelconque des revendications.

Des détails et particularités de l'invention ressortiront de la description suivante, dans laquelle il est fait références aux dessins ci-annexés.

Dans ces dessins,
- les figures 1 à 3 correspondent aux figures 5 à 7 du document WO2007/082355, et

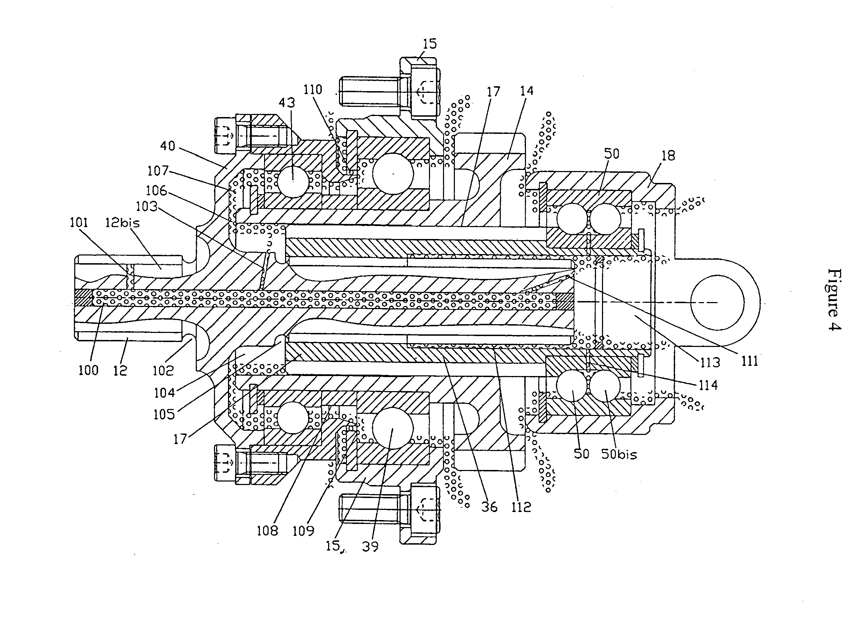

- la figure 4 est une vue en coupe transversale d'une transmission à calage variable selon l'invention destinée à être montée sur un moteur du type décrit dans le document WO2007/082355.

Le contenu de la demande WO2007/082355 est incorporé ici par référence, en particulier en ce qui concerne les pièces constitutives d'un moteur. Les signes de référence utilisés dans le présent mémoire correspondent à ceux utilisés dans le document WO2007/082355, pour représenter des éléments ou pièces similaires ou identiques. Certaines pièces ou éléments du moteur de l'invention ne seront pas représentées dans les dessins du présent mémoire, car représentées à titre d'exemple de réalisation dans une ou des figures du document WO2007/082355.

Le moteur à combustion interne à quatre temps selon l'invention comprend au moins une phase d'aspiration, une phase de compression, une phase de détente et une phase d'échappement, ledit moteur fonctionnant par auto-inflammation ou par allumage commandé comprenant :
- une pièce carter cylindre (1) présentant une première série de cylindres (2) présentant chacun un axe et un diamètre et une deuxième série de cylindres (3) présentant chacun un axe et un diamètre, les cylindres (2) de la première série présentant une cylindrée et un diamètre plus grands que la cylindrée et le diamètre des cylindres (3) de la deuxième série,
- des pistons (6,8), chaque piston étant adapté pour être animé d'un mouvement alternatif dans un cylindre et étant associé à une bielle,
- deux lignes d'arbres vilebrequins présentant des axes de rotation parallèles entre eux, une première ligne (4) présentant une manivelle avec une grande course, tandis que la deuxième ligne (5) présente une manivelle avec une petite course inférieure à la grande course de la manivelle de la première ligne d'arbre vilebrequin, lesdits arbres vilebrequins (4,5) étant adaptés pour être accouplés à même vitesse de rotation au moyen d'un train d'engrenages (14,16) et d'une transmission à calage variable (10).

Chaque piston est associé à une bielle (7,9) opérée avec une manivelle d'un vilebrequin, la manivelle de petite course de la deuxième ligne d'arbre vilebrequin (5) opérant la bielle (9) du piston (8) se déplaçant dans le petit cylindre (3), tandis que la manivelle de grande course de la première ligne d'arbre vilebrequin (4) opère la bielle (7) du piston (6) se déplaçant dans le grand cylindre (2).

La première série de cylindres (2) est disposée au dessus de la première ligne d'arbre vilebrequin (4), tandis que la deuxième série de cylindres (3) est disposée au-dessus de la deuxième ligne d'arbre vilebrequin (5).

Chaque cylindre (2) de la première série communique avec au moins un cylindre (3) de la deuxième série via un espace mort de manière à former un groupe de deux cylindres (2,3) communiquant entre eux pour permettre aux gaz de passer d'un cylindre à l'autre indépendamment de la position des pistons (6,8) se déplaçant dans lesdits cylindres (2,3).

Le moteur comporte un aménagement pour la transmission à calage variable (10), ledit aménagement étant adapté pour recevoir au moins partiellement un dispositif de commande de la différence d'angle de phase entre les première et deuxième lignes d'arbre vilebrequin, la première et la deuxième ligne d'arbre vilebrequin étant associées respectivement à une première roue d'entraînement et à une deuxième roue d'entraînement, tandis qu'un moyen d'entraînement s'étend entre lesdites roues.

La transmission à calage variable (10) comprend un ensemble séparé de l'arbre (13) du vilebrequin à manivelle à petite course (5), la transmission à calage variable (10) étant dotée d'un palier applique (15) qui se fixe par centrage dans un orifice prévu dans le carter cylindre (1), la transmission à calage variable comprenant un arbre (12) comprenant des moyens d'accouplement pour accoupler ledit arbre (12) à l'arbre du vilebrequin à petite course (5) ou à l'arbre vilebrequin à grande course, une extrémité dudit arbre (12) présentant des cannelures externes, tandis que l'arbre (13) est associé à un élément (20) ou présente une portion présentant un évidement avec des cannelures internes adaptées pour coopérer avec les cannelures externes de l'arbre (12) pour assurer un accouplement des arbres (12,13) entre eux, tout en permettant un déplacement axial entre eux. La transmission à calage variable comporte en outre un tube ou arbre coulissant (17) axialement par rapport à l'axe de rotation de l'arbre vilebrequin des pistons des cylindres de la première ou deuxième série, et des moyens de butées pour limiter la course du mouvement de la transmission à calage variable entre un début et une fin de course.

L'arbre d'accouplement (12) présente un canal interne 100 pour amener au moins un lubrifiant entre ledit arbre (12) et le manchon (36).

La transmission à calage variable (10) selon l'invention comporte un système de canaux et/ou de passages 100,101, etc. reliés directement et/ou indirectement au canal interne 100 de l'arbre d'accouplement 12 pour amener du lubrifiant à la bague interne (50) s'étendant entre la pièce d'attache (18) et le tube coulissant (17), ainsi que dans un ou des canaux s'étendant entre l'arbre d'accouplement 12 et une partie du tube coulissant 17.

Le système de canaux et/ou de passages reliés directement et/ou indirectement au canal interne de l'arbre d'accouplement comprend un ou des passages permettant au lubrifiant de s'échapper hors de la transmission à calage variable (10) après le passage de lubrifiant au moins par la bague interne (50) s'étendant entre la pièce d'attache (18) et le tube coulissant (17).

En particulier, le système de canaux et/ou de passages 100, 101 reliés directement et/ou indirectement au canal interne 100 de l'arbre d'accouplement 12 est agencé pour assurer l'écoulement de lubrifiant par la force centrifuge créée par la rotation de l'arbre d'accouplement (12).

Le système de canaux et/ou de passages comprend les canaux suivants :
- un canal central 100 s'étendant dans l'arbre 12 entre ses deux extrémités, l'extrémité du canal 100 adjacente de la pièce d'attache 18 étant obturée ;
- un canal 101 (avantageusement radial) s'étendant entre le canal central 100 et une ou des cannelures de l'extrémité d'accouplement 12bis de l'arbre 12 ;
- une gorge 102 s'étendant entre la pièce d'accouplement 12bis et le pallier 40, cette gorge étant apte à recevoir le lubrifiant poussé hors des cannelures lors d'un mouvement axial avec l'évidement avec cannelure d'une extrémité d'un arbre cannelé ;
- un canal 103 pour amener du lubrifiant du canal central 100 vers l'extrémité du tube coulissant 17 tournée vers l'arbre à came du moteur, ce canal amenant en fait du lubrifiant dans une chambre torique 104 présentant une gorge torique 105 située au moins partiellement à un niveau cylindrique par rapport à l'axe de l'arbre 12 situé sous la face cylindrique intérieure du tube 17 ;
- un canal 106 reliant la chambre torique 105 à une chambre torique 107 destinée à amener du lubrifiant au niveau du roulement 43 ;
- un canal de forme évasée 108 qui donne au lubrifiant une vitesse accrue reliant le roulement 43 à une chambre de distribution 109 distribuant du lubrifiant au niveau des roulements 39 du palier applique 15, la chambre de distribution 109 présentant une sortie d'évacuation 110 amenant du lubrifiant entre une portion du pallier applique 15 et une portion du palier 40, du lubrifiant pouvant s'échapper du roulement 39 entre le palier applique 15 et l'engrenage 14 ;
- un canal 111 reliant le canal central 100 à un creux 112 s'étendant entre le tube 17 et la face extérieure de l'arbre 12, ce canal amène également du lubrifiant dans une chambre 113 de la pièce d'attache 18 ;
- un canal 114 s'étendant dans la bague intérieure des roulements 50 entre la chambre 113 et la face intérieure des roulements, ce canal amenant du lubrifiant entre les paires de roulements 50, 50bis, le lubrifiant pouvant alors s'échapper des roulements 50, 50bis.

Le lubrifiant est amené dans le canal central 100 sous pression ou sous légère pression. Ensuite lors de la rotation de l'arbre 12, le lubrifiant s'écoule dans les différents canaux et chambres par la force centrifuge. Grâce à l'écoulement du lubrifiant dans la transmission à calage variable, et à son évacuation par la force centrifuge, les différentes pièces mobiles de la transmission à calage variable sont lubrifiées et nettoyées, assurant ainsi un glissement amélioré. Le lubrifiant est montré à la figure 4 par des petites bulles distantes les unes des autres, dans sa position atteinte lors de la rotation de l'arbre 12 (le lubrifiant étant soumis à une force centrifuge).

Avantageusement, comme décrit dans le document WO2007/082355, la substitution d'un accouplement sans support entre le vilebrequin à petite course (5) et la transmission à calage variable (10) par un accouplement avec support par le palier (20) du tourillon du vilebrequin à petite course (5) a pour avantage de limiter le roulement (39) à une seule rangée appropriée entre le palier applique (15) et le manchon (36).

L'arbre (35) et le manchon (36) sont avantageusement maintenus concentriquement et axialement l'un par rapport à l'autre au moyen d'un palier (40) solidaire de l'arbre (35). Le palier (40) est doté d'un roulement (43) à butée axiale et radiale permettant la rotation libre de l'arbre (35) indépendamment du manchon (36). Le palier (40) fait partie intégrante de l'arbre (35) à l'endroit où se limitent les cannelures droites (12) et (47). Le palier (40) et le manchon (36) sont situés à l'intérieur du carter moteur (1). Le palier (40) est réalisé sous la forme d'un disque régulièrement transpercé d'orifices permettant le boulonnage d'une bague (41) située sur la face du côté où se limitent les cannelures droites (47) de l'arbre (35). L'application de la bague (41) sur le palier (40) est mise à profit pour former un logement permettant la fixation de la bague extérieure (42) du roulement (43) à efforts axial et radial, tandis que la bague intérieure (44) du roulement (43) est fixée sur le manchon (36) contre une entretoise (45) en forme de bague entourant le manchon (36), l'entretoise (45) est destinée à rattraper l'espace de séparation entre la bague intérieure (44) du roulement (43) et la bague intérieure(37) du roulement (39), cette dernière étant maintenue axialement contre un épaulement prévu sur le manchon (36) par la fixation de toutes les pièces précitées au moyen d'un écrou (51) sur le manchon (36).

L'engrenage (14) du manchon (36) est situé à l'extérieur du carter moteur (1) accouplé à même vitesse de rotation avec le vilebrequin à grande course (4) au moyen d'un engrenage (16) solidaire à ce dernier et de deux engrenages intermédiaires (non représentés) entre les deux engrenages précités (14,16).

L'arbre de transmission (35) comprend du côté du palier (40) faisant face au palier applique (15), des cannelures droites (47) sur lesquelles vient s'emmancher le tube coulissant (17). Ce tube coulissant (17) comporte sur sa périphérie interne des cannelures (48) appariées aux cannelures droites (47), de manière que le tube coulissant (17) puisse coulisser axialement sur l'arbre de transmission (35).

Le manchon (36) comporte sur sa périphérie interne des cannelures hélicoïdales (49) appariées aux cannelures hélicoïdales externes (52) du tube coulissant (17), de manière que ce dernier puisse coulisser hélicoïdalement dans le manchon (36) et permettre le décalage angulaire entre les dits deuxième et troisième éléments en même temps que le coulissement droit entre les premier et troisième éléments précités. Le manchon (36) est fixé solidairement en rotation avec l'arbre (17) lorsque le tube coulissant (17) n'est pas en translation axiale.

La longueur du tube coulissant (17) est préétablie à l'intérieur du manchon (36) lorsque l'extrémité du dit tube coulissant (17) se situe à la limite d'arrêt définie par l'obstruction du palier (40). L'autre extrémité du tube coulissant (17) est dégagée à l'extérieur du manchon (36) au travers de l'engrenage (14) hors du bloc moteur (1) pour permettre, par des moyens appropriés, la fixation de la bague intérieure du roulement (50) à deux rangées à contact oblique. La dite bague intérieure du roulement (50) est rendue solidaire avec le mouvement de rotation du tube coulissant (17), tandis que la bague extérieure du roulement (50), sans mouvement de rotation, est solidarisée avec la pièce d'attache (18).

Une mémoire de décision du programme des taux de compression agissant par un système de commande hydraulique permet le déplacement de la pièce d'attache (18) et du tube coulissant (17) pour modifier le calage entre les deux vilebrequins (4 et 5). Le début de course de la transmission à calage variable est agencé de telle sorte que le tube coulissant (17) soit à la position de butée de sortie prévue sur vérin (non représentée) correspond au minimum d'avance angulaire de la manivelle du vilebrequin à petite course (5) par rapport à la manivelle du vilebrequin à grande course (4).

La fin de course de la transmission à calage variable est agencée de telle sorte que le tube coulissant (17) soit à la position de butée également prévu sur le vérin (non représentée) correspondant au maximum d'avance angulaire de la manivelle du vilebrequin à petite course (5) par rapport à la manivelle du vilebrequin à grande course (4).

La distribution est assurée au moins par un arbre à cames (non représenté) en prise à demi- vitesse avec le vilebrequin à grande course (4). Les soupapes d'admission et d'échappement dans la culasse (non représenté), mettant en communication périodique le groupe des deux cylindres (2,3) avec les conduites d'admission et d'échappement (non représenté) à des moments précis du cycle à quatre temps.

Le rapport entre la cylindrée du cylindre (3) et la cylindrée du cylindre (2) se situe au moins entre 1/10 et 9/10 de préférence entre 1/5 et 3/5 permettant d'adapter le rapport volumétrique du moteur en fonction du taux de la pression de suralimentation.

La transmission à calage variable (10) est dotée d'un palier applique (15) qui se fixe au carter cylindre (1), de manière que la transmission à calage variable (10) puisse constituer un ensemble séparé de l'arbre (13) du vilebrequin à manivelle à petite course (5). A cet effet, la transmission à calage variable (10) et le vilebrequin à manivelle à petite course (5) sont réalisés chacun avec leur arbre respectif (12,13). L'extrémité à cannelures externes de l'arbre (12) de la transmission à calage variable (10) est réalisée de manière à faire correspondre les cannelures internes situées dans le tourillon du palier (20) et dans l'arbre (13). L'accouplement entre les deux parties jointives est prévu par un glissement axial au moment de l'application du palier applique (15) dans un orifice prévu dans le carter cylindre (1). Le palier applique (15) est axé sur l'arbre (13) du vilebrequin à manivelle à petite course (5), de manière à permettre le centrage de l'arbre (12) dans le tourillon (20) et dans ledit arbre (13), ce dernier servant avantageusement de palier rigide à l'arbre (12) lors de l'application du palier applique (15) sur le carter cylindre (1); ce moyen permettant le démontage de la transmission à calage variable (10) hors du carter cylindre et hors du carter d'accouplement(1) sans devoir procéder au démontage du vilebrequin à manivelle à petite course (5).

L'extrémité jointive mâle de l'arbre (12) de la transmission à calage variable (10) et l'extrémité jointive femelle façonnée dans l'arbre (13) au niveau du tourillon (20) du vilebrequin à manivelle à petite course (5) apportent l'avantage de diminuer l'encombrement de l'accouplement de la transmission à calage variable dans le carter moteur (1).

Suivant une forme préférée de l'invention le moteur comprend des moyens pour renforcer la rigidité axiale entre le vilebrequin à petite course (5) et la transmission à calage variable (10), les arbres (12 et 13) sont fusionnés en un seul arbre de manière à permettre que l'arbre de transmission (35) comprenant le disque (40) et les cannelures droites (47) s'associent au vilebrequin à petite course (5). La distance de séparation entre les supports de fixation du disque (40) et le palier (15) est réalisée à la même distance de séparation entre la fixation du carter cylindre (1) du palier (15) et le support de fixation du disque (40) lorsque l'arbre du vilebrequin à petite course est inséré dans les paliers (20) du carter cylindre (1). Il découle de cet assemblage une fixation axiale de l'arbre du vilebrequin à petite course (5) par le roulement (39) et une fixation radiale du manchon (36) par les paliers du vilebrequin à petite course (5).

Suivant une forme préférée de l'invention, dans le carter d'accouplement (31) il est prévu deux engrenages d'accouplement intermédiaires (non représentés) entre les engrenages (14) du vilebrequin à petite course (5) et un deuxième engrenage (16) fixé à l'entretoise (19) solidaire du volant du moteur (26) et du vilebrequin à grande course (4) de façon à obtenir des sens de rotation inverses à même vitesse des deux vilebrequins (4,5).

La transmission à calage variable (10) comprend un tube coulissant (17) du côté faisant face à l'engrenage (14), la partie externe du tube coulissant comporte sur sa périphérie externe des cannelures hélicoïdales appariées aux cannelures hélicoïdales (non représenté) de l'engrenage (14). Le tube coulissant (17) comprend également des cannelures droites internes (non représentées) appariées aux cannelures externes solidaires de l'arbre (12) (non représentées) sur lesquelles vient s'emmancher le tube coulissant (17), de manière que le dit tube (17) en coulissant puisse réaliser le décalage angulaire entre l'arbre de transmission (12) et l'engrenage (14).

Une mémoire de décision du programme des taux de compression agissant sur le vérin de commande (non représenté) fixé sur la pièce d'attache (18) et le tube coulissant (17) afin de modifier le calage angulaire entre les deux arbres des deux vilebrequins (4,5).

Le début et la fin de course de la transmission à calage variable peuvent être agencés de telle sorte que le tube coulissant (17) ne puisse coulisser au-delà des positions de butées qui sont prévues sur le vérin de commande (non représenté). Le dit vérin de commande étant fixé sur un support prévu sur le couvercle de fermeture (23) du carter d'accouplement (31) situé à côté du volant moteur (26). Le démontage du couvercle de fermeture (23) permettant de rendre accessible l'entretien ou le démontage de la transmission à calage variable (10) sans le démontage du carter d'accouplement (31). Suivant l'invention et suivant cette disposition, l'axe du dit vérin de commande est avantageusement fixé à la pièce d'attache (18) de la commande de la transmission à calage variable (10).

Selon une forme préférée de l'invention, les rapports volumétriques minimal et maximal sélectionnés pour le type de moteur à concevoir, sont réalisés en fonction des dimensions des différents éléments du moteur, à savoir d'une part, le rapport entre la cylindrée des deux cylindres groupés (2 et 3) et d'autre part, le rapport formé par le volume total des deux cylindrées de ces cylindres (2,3) avec le volume formé par l'espace mort (24), ces derniers rapports sont agencés de telle manière, que l'avance angulaire maximale de la manivelle du vilebrequin à petite course (5) par rapport à la manivelle du vilebrequin à grande course (4), définie par la position de fin de course de la transmission à calage variable, fasse correspondre, en phase fin de compression (point mort haut du piston 6), le positionnement du piston (8) avec l'espace additionnel nécessaire à l'espace mort (24) pour définir le dit rapport volumétrique minimal du moteur avec un angle d'au moins 90° entre la bielle (9) et la manivelle du vilebrequin à petite course (5).

La transmission à calage variable selon l'invention est adaptée pour le moteur décrit dans le document WO2007/082355, mais peut également être utilisée avec d'autres moteurs comportant :
- une pièce carter cylindre (1) présentant une première série de cylindres (2) présentant chacun un axe et un diamètre et une deuxième série de cylindres (3) présentant chacun un axe et un diamètre, les cylindres (2) de la première série présentant une cylindrée et un diamètre plus grands que la cylindrée et le diamètre des cylindres (3) de la deuxième série,
- des pistons (6,8), chaque piston étant adapté pour être animé d'un mouvement alternatif dans un cylindre et étant associé à une bielle, et
- deux lignes d'arbres vilebrequins présentant des axes de rotation parallèles entre eux, une première ligne (4) présentant une manivelle avec une grande course, tandis que la deuxième ligne (5) présente une manivelle avec une petite course inférieure à la grande course de la manivelle de la première ligne d'arbre vilebrequin, lesdits arbres vilebrequins (4,5) étant adaptés pour être accouplés à même vitesse de rotation au moyen d'un train d'engrenages (14,16) et d'une transmission à calage variable (10)

## Revendications

1. Moteur à combustion interne à quatre temps comprenant au moins une phase d'aspiration, une phase de compression, une phase de détente et une phase d'échappement, ledit moteur fonctionnant par auto-inflammation ou par allumage commandé comprenant :
- une pièce carter cylindre (1) présentant une première série de cylindres (2) présentant chacun un axe et un diamètre et une deuxième série de cylindres (3) présentant chacun un axe et un diamètre, les cylindres (2) de la première série présentant une cylindrée et un diamètre plus grands que la cylindrée et le diamètre des cylindres (3) de la deuxième série,
- des pistons (6,8), chaque piston étant adapté pour être animé d'un mouvement alternatif dans un cylindre et étant associé à une bielle,
- deux lignes d'arbres vilebrequins présentant des axes de rotation parallèles entre eux, une première ligne (4) présentant une manivelle avec une grande course, tandis que la deuxième ligne (5) présente une manivelle avec une petite course inférieure à la grande course de la manivelle de la première ligne d'arbre vilebrequin, lesdits arbres vilebrequins (4,5) étant adaptés pour être accouplés à même vitesse de rotation au moyen d'un train d'engrenages (14,16) et d'une transmission à calage variable (10) ;
dans lequel chaque piston étant associé à une bielle (7,9) est opéré avec une manivelle d'un vilebrequin, la manivelle de petite course de la deuxième ligne d'arbre vilebrequin (5) opérant la bielle (9) du piston (8) se déplaçant dans le petit cylindre (3), tandis que la manivelle de grande course de la première ligne d'arbre vilebrequin (4) opère la bielle (7) du piston (6) se déplaçant dans le grand cylindre (2),
dans lequel la première série de cylindres (2) est disposée au dessus de la première ligne d'arbre vilebrequin (4), tandis que la deuxième série de cylindres (3) est disposée au-dessus de la deuxième ligne d'arbre vilebrequin (5),
dans lequel chaque cylindre (2) de la première série communique avec au moins un cylindre (3) de la deuxième série via un espace mort de manière à former un groupe de deux cylindres (2,3) communiquant entre eux pour permettre aux gaz de passer d'un cylindre à l'autre indépendamment de la position des pistons (6,8) se déplaçant dans lesdits cylindres (2,3),
lequel moteur comporte un aménagement pour la transmission à calage variable (10), ledit aménagement étant adapté pour recevoir au moins partiellement un dispositif de commande de la différence d'angle de phase entre les première et deuxième lignes d'arbre vilebrequin, la première et la deuxième ligne d'arbre vilebrequin étant associées respectivement à une première roue d'entraînement et à une deuxième roue d'entraînement, tandis qu'un moyen d'entraînement s'étend entre lesdites roues,
dans lequel la transmission à calage variable (10) comprend un ensemble séparé de l'arbre (13) du vilebrequin à manivelle à petite course (5), la transmission à calage variable (10) étant dotée d'un palier applique (15) qui se fixe par centrage dans un orifice prévu dans le carter cylindre (1), la transmission à calage variable comprenant un arbre (12) comprenant des moyens d'accouplement pour accoupler ledit arbre (12) à l'arbre du vilebrequin à petite course (5) ou à l'arbre vilebrequin à grande course, une extrémité dudit arbre (12) présentant des cannelures externes, tandis que l'arbre (13) est associé à un élément (20) ou présente une portion présentant un évidement avec des cannelures internes adaptées pour coopérer avec les cannelures externes de l'arbre (12) pour assurer un accouplement des arbres (12,13) entre eux, tout en permettant un déplacement axial entre eux, la transmission à calage variable comportant en outre un tube ou arbre coulissant (17) axialement par rapport à l'axe de rotation de l'arbre vilebrequin des pistons des cylindres de la première ou deuxième série, des moyens de butées pour limiter la course du mouvement de la transmission à calage variable entre un début et une fin de course, **une pièce d'attache (18) pour attacher le tube ou arbre coulissant (17) à un vérin de commande, et une bague interne (50) avec une paire de roulements (50,50bis) s'étendant entre la pièce d'attache (18) et le tube coulissant (17) ; ledit tube ou arbre coulissant (17) coulissant dans un manchon (36) qui comporte sur sa périphérie interne des cannelures hélicoïdales (49) appariées aux cannelures hélicoïdales externes (52) du tube coulissant (17),**
dans lequel l'arbre d'accouplement (12) présente un canal interne pour amener au moins un lubrifiant entre ledit arbre **d'accouplement** (12) et le manchon (36), **caractérisé en ce que** la transmission à calage variable (10) comporte un système de canaux et/ou de passages reliés directement et/ou indirectement au canal interne (100) de l'arbre d'accouplement (12) pour amener du lubrifiant à la bague interne (50) s'étendant entre la pièce d'attache (18) et le tube coulissant (17), ainsi que dans un ou des canaux s'étendant entre l'arbre d'accouplement **(12)** et une partie du tube coulissant **(17),**
**en ce que le canal interne est un canal central (100) s'étendant dans l'arbre (12) entre ses deux extrémités, l'extrémité du canal central (100) adjacente de la pièce d'attache (18) étant obturée ;**
**en ce qu'un** premier canal (111) relie **le canal central (100) à un creux (112) s'étendant entre le tube coulissant (17) et la face extérieure de l'arbre (12), ce canal (111) amènant également du lubrifiant dans une chambre (113) de la pièce d'attache (18) ;**
**en ce qu'un** deuxième canal **(114)** s' étend **dans la bague intérieure des roulements (50) entre la chambre (113) et la face intérieure des roulements, ce canal amenant du lubrifiant entre les paires de roulements (50, 50bis), le lubrifiant pouvant alors s'échapper des roulements (50, 50bis),**
**en ce que** le système de canaux et/ou de passages reliés directement et/ou indirectement au canal interne (100) de l'arbre d'accouplement (12) comprend un ou des passages permettant au lubrifiant de s'échapper hors de la transmission à calage variable (10) après le passage de lubrifiant au moins par la bague interne (50) s'étendant entre la pièce d'attache (18) et le tube coulissant (17), **et**
**en ce que** le système de canaux et/ou de passages reliés directement et/ou indirectement au canal interne de l'arbre d'accouplement est agencé pour assurer l'écoulement de lubrifiant par la force centrifuge créée par la rotation de l'arbre d'accouplement (12).

2. Moteur suivant la revendication 1 , dans lequel pour chaque groupe de cylindres reliés entre eux par un canal, l'axe d'un cylindre de la première série du groupe considéré forme avec une droite parallèle à l'axe de rotation d'une ligne d'arbre vilebrequin un premier plan, tandis que l'axe du cylindre de la deuxième série du groupe considéré forme avec une droite parallèle à l'axe de rotation d'une ligne d'arbre vilebrequin un deuxième plan, **caractérisé en ce que** lesdits plans définissent entre eux un angle compris entre 1° et 60°, avantageusement entre 10° et 50°, de préférence entre 15° et 45°, les axes des cylindres de chaque groupe de cylindres se coupant avantageusement sensiblement en un point appartenant à une même droite.

3. Moteur suivant la revendication 2, dans lequel un plan est défini par les deux axes de rotation des deux lignes d'arbre vilebrequin, et dans lequel un plan médian ou une droite médiane défini entre lesdits premier et deuxième plans ou entre lesdits axes de rotation, **caractérisé en ce que** le plan médian ou la droite médiane d'un groupe de cylindres est sensiblement perpendiculaire audit plan défini par les deux axes de rotation des deux lignes d'arbre vilebrequin.

4. Moteur suivant l'une quelconque des revendications précédentes, **caractérisé en ce qu'**il comprend un arbre à cames en prise à demi-vitesse avec la première ligne d'arbre vilebrequin (4) pour assurer la communication périodique des groupes de deux cylindres (2,3) avec des conduites d'admission et d'échappement au moyen de soupapes d'admission et d'échappement à des moments prédéterminés du cycle à quatre temps.

5. Moteur suivant la revendication 4 dans lequel un volant moteur est monté sur l'axe de l'arbre vilebrequin à grande course (4), tandis que la transmission à calage variable (10) est monté sur l'axe de l'arbre vilebrequin à petite course (5), **caractérisé en ce que** les axes des deux vilebrequins (4,5) sont adaptés de manière à ce que la transmission à calage variable (10) se situe à côté du volant du moteur (26), la commande de la transmission à calage variable (10) comprenant avantageusement un vérin de pilotage en prise directe, pour contrôler la différence d'angle de phase entre l'arbre vilebrequin à petite course (5) et l'arbre vilebrequin à grande course (4).

6. Moteur suivant l'une quelconque des revendications précédentes, **caractérisé en ce que** l'arbre (13) est associé à un tourillon de palier (20) présentant des cannelures internes coopérant avec les cannelures externes de l'arbre (12), et
**caractérisé en ce qu'**avantageusement pour renforcer la rigidité axiale entre le vilebrequin à petite course (5) et la transmission à calage variable (10), les arbres (12,13) sont fusionnés en un seul arbre de manière à permettre que l'arbre de transmission (35) comprenant le disque (40) et les cannelures droites (47) s'associent au vilebrequin à petite course (5), la distance de séparation entre les supports de fixation du disque (40) et le palier (15) étant avantageusement réalisée à la même distance de séparation entre la fixation du carter cylindre (1) du palier (15) et le support de fixation du disque (40) lorsque l'arbre du vilebrequin à petite course est inséré dans les paliers du carter cylindre.

7. Moteur suivant l'une quelconque des revendications précédentes, en ce qu'il comprend un volant moteur (26) axé et fixé sur l'extrémité de l'arbre vilebrequin (4) des pistons des cylindres de la première série, ledit volant moteur se situant avantageusement dans un carter d'accouplement (31), la transmission à calage variable (10) étant avantageusement axée sur l'extrémité de l'arbre du petit vilebrequin (5) a coté du volant du moteur (26), tandis que le moteur comporte de préférence dans le carter d'accouplement (31), une transmission avec train d'engrenages entre l'arbre vilebrequin (5) des pistons de la deuxième série et le volant du moteur (26) via la transmission à calage variable (10).

8. Moteur suivant l'une quelconque des revendications précédentes, **caractérisé en ce qu'**il comprend un vérin de commande commandant le déplacement axial du tube ou de l'arbre coulissant (17), ledit vérin étant associé à des moyens de butées pour limiter le déplacement entre ledit début et fin de course, ledit vérin de commande étant avantageusement fixé sur un support prévu sur un couvercle de fermeture (23) du carter d'accouplement (31) situé à côté du volant moteur (26).

9. Moteur suivant l'une quelconque des revendications précédentes, **caractérisé en ce que** les arbres des deux vilebrequins (4,5) sont associés à des engrenages (14,16) en prise directe, les arbres tournant en sens de rotation inverse et à même vitesse, les arbres des deux vilebrequins (4,5) étant avantageusement accouplés l'un à l'autre par un train de deux engrenages d'accouplement intermédiaires disposé entre les deux engrenages (14,16) montés sur les arbres afin que ces derniers tournent en sens de rotation inverse et à même vitesse, tandis que les deux engrenages intermédiaires situés entre les engrenages (14,16) montés sur les arbres sont de préférence disposés et accouplés chacun de part et d'autre d'un plan passant par les axes des deux arbres vilebrequins (4,5).

10. Moteur suivant l'une quelconque des revendications précédentes, **caractérisé en ce que** la transmission à calage variable comprend un système de canaux et/ou de passages comprenant un ou des canaux suivants, avantageusement plusieurs des canaux ou passages suivants :
- un canal (101) (avantageusement radial) s'étendant entre le canal central (100) et une ou des cannelures de l'extrémité d'accouplement (12bis) de l'arbre (12) ; et/ou
- une gorge (102) s'étendant entre la pièce d'accouplement (12bis) et le pallier (40), cette gorge étant apte à recevoir le lubrifiant poussé hors des cannelures lors d'un mouvement axial avec l'évidement avec cannelure d'une extrémité d'un arbre canelé ; et/ou
- un canal (103) pour amener du lubrifiant du canal central (100) vers l'extrémité du tube coulissant (17) tournée vers l'arbre à came du moteur, ce canal amenant en fait du lubrifiant dans une chambre torique (104) présentant une gorge torique (105) située au moins partiellement à un niveau cylindrique par rapport à l'axe de l'arbre (12) situé sous la face cylindrique intérieure du tube (17) ; et/ou
- un canal (106) reliant la chambre torique (105) à une chambre torique (107) destinée à amener du lubrifiant au niveau du roulement (43) ; et/ou
- un canal de forme évasée (108) qui donne au lubrifiant une vitesse accrue reliant le roulement (43) à une chambre de distribution (109) distribuant du lubrifiant au niveau des roulements (39) du palier applique (15), la chambre de distribution (109) présentant une sortie d'évacuation (110) amenant du lubrifiant entre une portion du pallier applique (15) et une portion du palier (40), du lubrifiant pouvant s'échapper du roulement (39) entre le palier applique (15) et l'engrenage (14).

11. Moteur suivant l'une quelconque des revendications précédentes, **caractérisé en ce que** la transmission à calage variable comprend un système de canaux et/ou de passages comprenant au moins les canaux ou passages suivants :
- un canal (101) (avantageusement radial) s'étendant entre le canal central (100) et une ou des cannelures de l'extrémité d'accouplement (12bis) de l'arbre (12) ; et
- une gorge (102) s'étendant entre la pièce d'accouplement (12bis) et le pallier (40), cette gorge étant apte à recevoir le lubrifiant poussé hors des cannelures lors d'un mouvement axial avec l'évidement avec cannelure d'une extrémité d'un arbre à came ; et
- un canal (103) pour amener du lubrifiant du canal central (100) vers l'extrémité du tube coulissant (17) tournée vers l'arbre à came du moteur, ce canal amenant en fait du lubrifiant dans une chambre torique (104) présentant une gorge torique (105) située au moins partiellement à un niveau cylindrique par rapport à l'axe de l'arbre (12) situé sous la face cylindrique intérieure du tube (17) ; et/ou
- un canal (106) reliant la chambre torique (105) à une chambre torique (107) destinée à amener du lubrifiant au niveau du roulement (43) ; et
- un canal de forme évasée (108) qui donne au lubrifiant une vitesse accrue reliant le roulement (43) à une chambre de distribution (109) distribuant du lubrifiant au niveau des roulements (39) du palier applique (15), la chambre de distribution (109) présentant une sortie d'évacuation (110) amenant du lubrifiant entre une portion du pallier applique (15) et une portion du palier (40), du lubrifiant pouvant s'échapper du roulement (39) entre le palier applique (15) et l'engrenage (14).

12. Engin ou appareil ou machine comportant au moins un moteur suivant l'une quelconque des revendications 1 à 11.

13. Transmission à calage variable tel que définie dans l'une quelconque des revendications 1 à 11, pour un moteur suivant l'une quelconque des revendications 1 à 11**, ladite transmission (10) dotée d'un palier applique (15) adapté pour se fixer par centrage dans un orifice prévu dans un carter cylindre (1) comprenant un arbre (12) comprenant des moyens d'accouplement pour accoupler ledit arbre (12) à l'arbre du vilebrequin à petite course (5) ou à l'arbre vilebrequin à grande course d'un moteur, une extrémité dudit arbre (12) présentant des cannelures externes, tandis que l'arbre (13) est associé à un élément (20) ou présente une portion présentant un évidement avec des cannelures internes adaptées pour coopérer avec les cannelures externes de l'arbre (12) pour assurer un accouplement des arbres (12,13) entre eux, tout en permettant un déplacement axial entre eux, la transmission à calage variable comportant en outre un tube ou arbre coulissant (17) axialement par rapport à l'axe de rotation de l'arbre vilebrequin des pistons des cylindres de la première ou deuxième série, des moyens de butées pour limiter la course du mouvement de la transmission à calage variable entre un début et une fin de course, une pièce d'attache (18) pour attacher le tube ou arbre coulissant (17) à un verin de commande, et une bague interne (50) avec une paire de roulements (50,50bis) s'étendant entre la pièce d'attache (18) et le tube coulissant (17) ; ledit tube ou arbre coulissant (17) coulissant dans un manchon (36) qui comporte sur sa périphérie interne des cannelures hélicoïdales (49) appariées aux cannelures hélicoïdales externes (52) du tube coulissant (17),**
**dans lequel l'arbre d'accouplement (12) présente un canal interne pour amener au moins un lubrifiant entre ledit arbre d'accouplement (12) et le manchon (36), caractérisé en ce que la transmission à calage variable (10) comporte un système de canaux et/ou de passages reliés directement et/ou indirectement au canal interne (100) de l'arbre d'accouplement (12) pour amener du lubrifiant à la bague interne (50) s'étendant entre la pièce d'attache (18) et le tube coulissant (17), ainsi que dans un ou des canaux s'étendant entre l'arbre d'accouplement (12) et une partie du tube coulissant (17),**
**en ce que le canal interne est un canal central (100) s'étendant dans l'arbre (12) entre ses deux extrémités, l'extrémité du canal central (100) adjacente de la pièce d'attache (18) étant obturée ;**
**en ce qu'un canal (111) reliant le canal central (100) à un creux (112) s'étendant entre le tube coulissant (17) et la face extérieure de l'arbre (12), ce canal (111) amenant également du lubrifiant dans une chambre (113) de la pièce d'attache (18) ;**
**en ce qu'un canal (114) s'étendant dans la bague intérieure des roulements (50) entre la chambre (113) et la face intérieure des roulements, ce canal amenant du lubrifiant entre les paires de roulements (50, 50bis), le lubrifiant pouvant alors s'échapper des roulements (50, 50bis),**
**en ce que le système de canaux et/ou de passages reliés directement et/ou indirectement au canal interne (100) de l'arbre d'accouplement (12) comprend un ou des passages permettant au lubrifiant de s'échapper hors de la transmission à calage variable (10) après le passage de lubrifiant au moins par la bague interne (50) s'étendant entre la pièce d'attache (18) et le tube coulissant (17), et**
**en ce que le système de canaux et/ou de passages reliés directement et/ou indirectement au canal interne de l'arbre d'accouplement (12) est agencé pour assurer l'écoulement de lubrifiant par la force centrifuge créée par la rotation de l'arbre d'accouplement (12).**

## Patentansprüche

1. Viertakt-Verbrennungsmotor, der mindestens eine Ansaugphase, eine Verdichtungsphase, eine Entspannungsphase und eine Ausstoßungsphase umfasst, wobei dieser Motor mit Verdichtungszündung oder mit Fremdzündung arbeitet und umfasst:
- einen Motorblock (1), der eine erste Reihe von Zylindern (2) aufweist, die jeweils eine Achse und einen Durchmesser aufweisen, und eine zweite Reihe von Zylindern (3), die jeweils eine Achse und einen Durchmesser aufweisen, wobei die Zylinder (2) der ersten Reihe einen Hubraum und einen Durchmesser aufweisen, die größer als der Hubraum und der Durchmesser der Zylinder (3) der zweiten Reihe sind,
- Kolben (6, 8), wobei jeder Kolben so ausgestaltet ist, dass er zu einer Hin- und Herbewegung in einem Zylinder veranlasst werden kann, und einer Pleuelstange zugeordnet ist,
- zwei Kurbelwellenstränge, die zueinander parallele Rotationsachsen aufweisen, wobei ein erster Wellenstrang (4) eine Kurbel mit einem großen Hub aufweist, während der zweite Wellenstrang (5) eine Kurbel mit einem kleinen Hub aufweist, der kleiner als der große Hub der Kurbel des ersten Kurbelwellenstrangs ist, wobei die Kurbelwellenstränge (4, 5) so ausgestaltet sind, dass sie bei gleicher Drehzahl über ein Zahnradgetriebe (14, 16) und eine Übertragung mit variabler Einstellung (10) kuppelbar sind;
bei dem jeder der einer Pleuelstange (7, 9) zugeordneten Kolben mit einer Kurbel einer Kurbelwelle betätigt wird, wobei die Kurbel mit kleinem Hub des zweiten Kurbelwellenstrangs (5) die Pleuelstange (9) des Kolbens (8), der in dem kleinen Zylinder (3) verfährt, betätigt, während die Kurbel mit großem Hub des ersten Kurbelwellenstrangs (4) die Pleuelstange (7) des Kolbens (6), der in dem großen Zylinder (2) verfährt, betätigt,
bei dem die erste Reihe von Zylindern (2) über dem ersten Kurbelwellenstrang (4) angeordnet ist, während die zweite Gruppe von Zylindern (3) über dem zweiten Kurbelwellenstrang (5) angeordnet ist,
bei dem jeder Zylinder (2) der ersten Reihe mit mindestens einem Zylinder (3) der zweiten Reihe über einen toten Raum in Verbindung steht, so dass eine Gruppe von zwei Zylindern (2, 3) gebildet wird, die miteinander in Verbindung stehen, damit die Gase unabhängige von der Position der Kolben (6, 8), die in den Zylindern (2, 3) verfahren, von einem Zylinder in den anderen strömen können,
der Motor eine Einrichtung für die Übertragung mit variabler Einstellung (10) aufweist, wobei diese Einrichtung so ausgestaltet ist, dass sie eine Vorrichtung zur Steuerung des Phasenwinkelunterschieds zwischen dem ersten und dem zweiten Kurbelwellenstrang mindestens teilweise aufnehmen kann, wobei der erste und der zweite Kurbelwellenstrang jeweils einem ersten bzw. einem zweiten Antriebsrad zugeordnet sind, während sich zwischen den Antriebsrädern ein Antriebsmittel erstreckt,
bei dem die Übertragung mit variabler Einstellung (10) eine von der Welle (13) der Kurbelwelle mit Kurbel mit kleinem Hub (5) getrennte Einheit umfasst, wobei die Übertragung mit variabler Einstellung (10) mit einem Wandlager (15) ausgestattet ist, das sich mittels Zentrierung in einer im Motorblock (1) vorgesehenen Öffnung fixiert, wobei die Übertragung mit variabler Einstellung eine Welle (12) mit Kupplungselementen zur Ankupplung dieser Welle (12) an die Welle der Kurbel mit kleinem Hub (5) oder an die Welle der Kurbel mit großem Hub umfasst, wobei ein Ende dieser Welle (12) äußere Riefelungen aufweist, während die Welle (13) mit einem Element (20) gepaart ist oder einen Teil aufweist, das/der eine Aussparung mit inneren Riefelungen aufweist, die so ausgestaltet sind, dass sie mit den äußeren Riefelungen der Welle (12) zusammenarbeiten können, um eine Verkupplung der Wellen (12, 13) miteinander sicherzustellen und dabei gleichzeitig deren axiale Verschiebung zueinander zu erlauben, wobei die Übertragung mit variabler Einstellung ferner beinhaltet: ein(e) bezüglich der Rotationsachse der Kurbelwelle der Kolben der Zylinder der ersten oder zweiten Reihe axial verschiebbar angeordnete(s) Schieberohr bzw. Schiebewelle (17), Anschläge darstellende Mittel zur Begrenzung des Bewegungshubs der Übertragung mit variabler Einstellung zwischen einem Hubanfang und einem Hubende, ein Befestigungsteil (18) zur Anbringung des Schieberohres bzw. der Schiebewelle (17) an einem Betätigungszylinder und einen Innenring (50) mit einem sich zwischen dem Befestigungsteil (18) und dem Schieberohr (17) erstreckendes Wälzlagerpaar (50, 50bis); wobei das Schieberohr bzw. die Schiebewelle (17) sich in einer Muffe (36) verschiebt, die an ihrem Innenumfang zu den schraubenförmigen Außenriefelungen (52) des Schieberohrs (17) passende schraubenförmige Riefelungen (49) beinhaltet,
bei dem die Kupplungswelle (12) einen Innenkanal aufweist, um zwischen diese Kupplungswelle (12) und die Muffe (36) mindestens einen Schmierstoff zu geleiten,
**dadurch gekennzeichnet, dass** die Übertragung mit variabler Einstellung (10) ein System von direkt und/oder indirekt mit dem Innenkanal (100) der Kupplungswelle (12) verbundenen Kanälen und/oder Durchgängen beinhaltet, um Schmierstoff zu dem sich zwischen dem Befestigungsteil (18) und dem Schieberohr (17) erstreckenden Innenring (50) sowie in einen oder mehrere sich zwischen der Kupplungswelle (12) und einem Abschnitt des Schieberohres (17) erstreckenden Kanäle zu geleiten,
dass es sich bei dem Innenkanal um einen sich zwischen seinen beiden Enden in der Welle (12) erstreckenden Zentralkanal (100) handelt, wobei das dem Teil (18) benachbarte Ende des Zentralkanals (100) verschlossen ist;
dass ein erster Kanal (111) den Zentralkanal (100) mit einer sich zwischen dem Schieberohr (17) und der Außenfläche der Welle (12) erstreckenden Höhlung (112) verbindet, wobei dieser Kanal (111) ebenfalls Schmierstoff in eine Kammer (113) des Befestigungsteils (18) geleitet;
dass ein zweiter Kanal (114) sich im Innenring der Wälzlager (50) zwischen der Kammer (113) und der Innenfläche der Wälzlager erstreckt, wobei dieser Kanal derart Schmierstoff zwischen die Wälzlagerpaare (50, 50bis) geleitet, dass der Schmierstoff aus den Wälzlagern (50, 50bis) austreten kann,
dass das System von direkt und/oder indirekt mit dem Innenkanal (100) der Kupplungswelle (12) verbundenen Kanälen und/oder Durchgängen einen oder mehrere Durchgänge umfasst, die dem Schmierstoff erlauben, nach seinem Durchlaufen mindestens des sich zwischen dem Befestigungsteil (18) und dem Schieberohr (17) erstreckenden Innenrings (50) aus der Übertragung mit variabler Einstellung (10) auszutreten, und
dass das System von direkt und/oder indirekt mit dem Innenkanal der Kupplungswelle verbundenen Kanälen und/oder Durchgängen dazu hergerichtet ist, das Abfließen von Schmierstoff durch die von der Rotation der Kupplungswelle (12) erzeugte Zentrifugalkraft sicherzustellen.

2. Motor gemäß Anspruch 1, bei dem hinsichtlich jeder Gruppe von miteinander durch einen Kanal verbundenen Zylindern, die Achse eines Zylinders der ersten Reihe der betreffenden Gruppe mit einer parallel zu der Rotationsachse eines Kurbelwellenstrangs verlaufenden Geraden eine erste Ebene bildet, während die Achse des Zylinders der zweiten Reihe der betreffenden Gruppe mit einer parallel zu der Rotationsachse eines Kurbelwellenstrangs verlaufenden Geraden eine zweite Ebene bildet, **dadurch gekennzeichnet, dass** diese Ebenen untereinander einen Winkel festlegen, der 1° bis 60°, vorteilhafterweise 10° bis 50°, vorzugsweise 15° bis 45°, beträgt, wobei sich die Achsen der Zylinder jeder Zylindergruppe vorteilhafterweise im Wesentlichen in einem Punkt schneiden, der zu einer gleichen Gerade gehört.

3. Motor gemäß Anspruch 2, bei dem von den zwei Rotationsachsen der zwei Kurbelwellenstränge eine Ebene definiert wird, und bei dem zwischen dieser jeweils ersten und zweiten Ebene bzw. zwischen diesen Rotationsachsen eine Mittelebene oder eine Mittelgerade definiert ist, **dadurch gekennzeichnet, dass** die Mittelebene oder die Mittelgerade einer Zylindergruppe im Wesentlichen senkrecht zu dieser von den zwei Rotationsachsen der zwei Kurbelwellenstränge definierten Ebene verläuft.

4. Motor gemäß einem der vorangehenden Ansprüche, **dadurch gekennzeichnet, dass** er eine Nockenwelle umfasst, die bei halber Drehzahl mit dem ersten Kurbelwellenstrang (4) im Eingriff steht, um die periodische Verbindung der Gruppen von zwei Zylindern (2, 3) mit Einlass- und Ausstoßleitungen mittels Einlass- und Ausstoßventilen zu vorgegebenen Zeitpunkten des Viertaktzyklus sicherzustellen.

5. Motor gemäß Anspruch 4, bei dem auf der Achse der Kurbelwelle mit großem Hub (4) ein Schwungrad angebracht ist, während auf der Achse der Kurbelwelle mit kleinem Hub (5) die Übertragung mit variabler Einstellung (10) angebracht ist, **dadurch gekennzeichnet, dass** die Achsen der zwei Kurbelwellen (4, 5) derart ausgestaltet sind, dass sich die Übertragung mit variabler Einstellung (10) neben dem Schwungrad (26) befindet, wobei die Steuerung der Übertragung mit variabler Einstellung (10) vorteilhafterweise einen im direkten Eingriff stehenden Steuerzylinder umfasst, um den Phasenwinkelunterschied zwischen der Kurbelwelle mit kleinem Hub (5) und der Kurbelwelle mit großem Hub (4) zu überwachen.

6. Motor gemäß einem der vorangehenden Ansprüche,
**dadurch gekennzeichnet, dass** die Welle (13) mit einem Lagerzapfen (20) verknüpft ist, der innere Riefelungen aufweist, die mit den äußeren Riefelungen der Welle (12) zusammenarbeiten, und
**dadurch gekennzeichnet, dass**, um die axiale Steifigkeit zwischen dem Kurbeltrieb mit kleinem Hub (5) und der Übertragung mit variabler Einstellung (10) zu verstärken, die Wellen (12, 13) vorteilhafterweise zu einer einzigen Welle derart verschmolzen sind, dass sich die die Scheibe (40) umfassende Übertragungswelle (35) und die geraden Riefelungen (47) mit dem Kurbeltrieb mit kleinem Hub (5) verknüpfen können, wobei der Trennungsabstand zwischen den Haltern der Scheibe (40) und dem Lager (15) vorteilhafterweise mit dem gleichem Trennungsabstand zwischen der Befestigung des Motorblocks (1) des Lagers (15) und dem Halter der Scheibe (40) hergestellt ist, wenn die Welle des Kurbeltriebs mit kleinem Hub in die Lager des Motorblocks eingeführt wird.

7. Motor gemäß einem der vorangehenden Ansprüche, **dadurch gekennzeichnet, dass** er ein Schwungrad (26) umfasst, das achsgleich auf dem Ende der Kurbelwelle (4) der Kolben der Zylinder der ersten Reihe befestigt ist, wobei dieses Schwungrad vorteilhafterweise in einem Kupplungsgehäuse (31) gelegen ist, wobei die Übertragung mit variabler Einstellung (10) vorteilhafterweise gleichachsig mit dem Ende der Welle des kleinen Kurbeltriebs (5) neben dem Schwungrad (26) ist, während der Motor vorzugsweise im Kupplungsgehäuse (31), über die Übertragung mit variabler Einstellung (10) zwischen der Kurbelwelle (5) der Kolben der zweiten Reihe und dem Schwungrad (26) eine Übertragung mit Getriebezug aufweist.

8. Motor gemäß einem der vorangehenden Ansprüche, **dadurch gekennzeichnet, dass** er einen Betätigungszylinder umfasst, der die axiale Verschiebung des Schieberohres bzw. der Schiebewelle (17) steuert, wobei dieser Zylinder mit Anschlagmitteln zur Begrenzung der Verschiebung zwischen dem Hubanfang und -ende in Verbindung steht, wobei dieser Betätigungszylinder vorteilhafterweise an einem auf einem Verschlussdeckel (23) des neben dem Schwungrad (26) befindlichen Kupplungsgehäuses (31) vorgesehenen Träger befestigt ist.

9. Motor gemäß einem der vorangehenden Ansprüche, **dadurch gekennzeichnet, dass** die zwei Kurbelwellen (4, 5) in Verbindung stehen mit Zahnrädern (14, 16) in direktem Eingriff, wobei sich die Wellen in jeweils umgekehrter Drehrichtung und mit gleicher Geschwindigkeit drehen, wobei die zwei Kurbelwellen (4, 5) vorteilhafterweise über einen Getriebezug mit zwei Kupplungszwischenrädern aneinander gekuppelt sind, der zwischen den zwei Zahnrädern (14, 16) angeordnet ist, die auf den Wellen angebracht sind, damit sich Letztere in jeweils umgekehrter Drehrichtung und mit gleicher Geschwindigkeit drehen, während die zwei zwischen den auf den Wellen angebrachten Zahnrädern (14, 16) liegenden Zwischenzahnrädern vorzugsweise jeweils beiderseits einer durch die Achsen der zwei Kupplungswellen (4, 5) gehenden Ebene angeordnet und angekuppelt sind.

10. Motor gemäß einem der vorangehenden Ansprüche, **dadurch gekennzeichnet, dass** die Übertragung mit variabler Einstellung ein System von Kanälen und/oder Durchgängen umfasst, das einen oder mehrere folgende Kanäle, vorteilhafterweise mehrere der folgenden Kanäle oder Durchgänge umfasst:
- einen sich zwischen dem Zentralkanal (100) und einer oder mehreren Riefelungen des Kupplungsendes (12bis) der Welle (12) erstreckenden Kanal (101) (vorteilhafterweise radial); und/oder
- eine sich zwischen dem Kupplungsteil (12bis) und dem Lager (40) erstreckende Kehle (102), die geeignet ist, mit der Ausnehmung mit Riefelung eines Endes einer geriefelten Welle den bei einer axialen Bewegung aus den Riefelungen herausgestoßenen Schmierstoff aufzunehmen; und/oder
- einen Kanal (103) zum Geleiten des Schmierstoffes des Zentralkanals (100) zu dem zur Nockenwelle des Motors gewandten Ende des Schieberohres (17), wobei dieser Kanal in der Tat Schmierstoff in eine torische Kammer (104) geleitet, die eine torische Kehle (105) aufweist, die mindestens teilweise in einem relativ zur Achse der Welle (12) torischen Bereich, gelegen unter der inneren zylindrischen Fläche des Rohres (17), gelegen ist; und/oder
- einen Kanal (106), der die torische Kammer (105) mit einer torischen Kammer (107), die dazu bestimmt ist, Schmierstoff an das Lagers (43) zu geleiten, verbindet; und/oder
- einen aufgeweitet geformten Kanal (108), der als Verbindung des Wälzlagers (43) mit einer Schmierstoff an den Wälzlagern (39) des Wandlagers (15) verteilenden Verteilerkammer (109) dem Schmierstoff eine gesteigerte Geschwindigkeit verleiht, wobei die Verteilerkammer (109) einen Schmierstoff zwischen einen Abschnitt des Wandlagers (15) und einen Abschnitt des Lagers (40) geleitenden Auslass (110) aufweist, wobei Schmierstoff aus dem Wälzlager (39) zwischen dem Wandlager (15) und dem Zahnrad (14) austreten kann.

11. Motor gemäß einem der vorangehenden Ansprüche, **dadurch gekennzeichnet, dass** die Übertragung mit variabler Einstellung ein System von Kanälen und/oder Durchgängen umfasst, das mindestens die folgenden Kanäle oder Durchgänge umfasst:
- einen sich zwischen dem Zentralkanal (100) und einer oder mehreren Riefelungen des Kupplungsendes (12bis) der Welle (12) erstrecken Kanal (101) (vorteilhafterweise radial); und
- eine sich zwischen dem Kupplungsteil (12bis) und dem Lager (40) erstreckende Kehle (102), die geeignet ist, mit der Ausnehmung mit Riefelung eines Endes einer Nockenwelle den bei einer axialen Bewegung aus den Riefelungen hervorgestoßenen Schmierstoff aufzunehmen; und
- einen Kanal (103) zum Geleiten des Schmierstoffes des Zentralkanals (100) zu dem zur Nockenwellen des Motors gewandten Ende des Schieberohres (17), wobei dieser Kanal in der Tat Schmierstoff in eine torische Kammer (104) geleitet, die eine mindestens teilweise in einem relativ zur Achse der Welle (12), gelegen unter der inneren zylindrischen Fläche des Rohres (17), torischen Bereich gelegene torische Kehle (105) aufweist; und/oder
- einen Kanal (106), der die torische Kammer (105) mit einer torischen Kammer (107), die dazu bestimmt ist, Schmierstoff an das Lagers (43) zu geleiten, verbindet; und
- einen aufgeweitet geformten Kanal (108), der als Verbindung des Wälzlagers (43) mit einer Schmierstoff an den Wälzlagern (39) des Wandlagers (15) verteilenden Verteilerkammer (109) dem Schmierstoff eine gesteigerte Geschwindigkeit verleiht, wobei die Verteilerkammer (109) einen Schmierstoff zwischen einen Abschnitt des Wandlagers (15) und einen Abschnitt des Lagers (40) geleitenden Auslass (110) aufweist, wobei Schmierstoff aus dem Wälzlager (39) zwischen dem Wandlager (15) und dem Zahnrad (14) austreten kann.

12. Gerät oder Apparat oder Maschine, das/der/die mindestens einen Motor gemäß einem der Ansprüche 1 bis 11 aufweist.

13. Übertragung mit variabler Einstellung wie in einem der Ansprüche 1 bis 11 definiert, für einen Motor gemäß einem der Ansprüche 1 bis 11, wobei die Übertragung mit variabler Einstellung (10) mit einem Wandlager (15) ausgestattet ist, das so ausgestaltet ist, dass es sich mittels Zentrierung in einer im Motorblock (1) vorgesehenen Öffnung fixiert, wobei der Motorblock eine Welle (12) mit Kupplungsmitteln zum Ankuppeln dieser Welle (12) an die Kurbelwelle mit kleinem Hub (5) oder an die Kurbelwelle mit kleinem Hub (4) eines Motors umfasst, wobei ein Ende dieser Welle (12) Außenriefen aufweist, während die Welle (13) mit einem Element (20) gepaart ist oder einen Teil aufweist, das/der eine Aussparung mit inneren Riefelungen aufweist, wobei Letztere so ausgestaltet sind, dass sie mit den äußeren Riefelungen der Welle (12) zusammenarbeiten können, um eine Verkupplung der Wellen (12, 13) miteinander sicherzustellen und dabei gleichzeitig deren axiale Verschiebung zueinander zu erlauben, wobei die Übertragung mit variabler Einstellung ferner beinhaltet: ein(e) bezüglich der Rotationsachse der Kurbelwelle der Kolben der Zylinder der ersten oder zweiten Reihe axial verschiebbar angeordnete(s) Schieberohr bzw. Schiebewelle (17), Anschläge darstellende Mittel zur Begrenzung des Bewegungshubs der Übertragung mit variabler Einstellung zwischen einem Hubanfang und einem Hubende, ein Befestigungsteil (18) zur Anbringung des Schieberohres bzw. der Schiebewelle (17) an einem Betätigungszylinder und einen Innenring (50) mit einem sich zwischen dem Befestigungsteil (18) und dem Schieberohr (17) erstreckenden Wälzlagerpaar (50, 50bis); wobei dieses Schieberohr oder Schiebewelle (17) sich in einer Muffe (36) verschiebt, die an ihrem Innenumfang zu den schraubenförmigen Außenriefelungen (52) des Schieberohrs (17) passende schraubenförmige Riefelungen (49) beinhaltet,
bei dem die Kupplungswelle (12) einen Innenkanal aufweist, um zwischen diese Kupplungswelle (12) und die Muffe (36) mindestens einen Schmierstoff zu geleiten,
**dadurch gekennzeichnet, dass** die Übertragung mit variabler Einstellung (10) ein System von direkt und/oder indirekt mit dem Innenkanal (100) der Kupplungswelle (12) verbundenen Kanälen und/oder Durchgängen beinhaltet, um Schmierstoff zu dem sich zwischen dem Befestigungsteil (18) und dem Schieberohr (17) erstreckenden Innenring (50) sowie in einen oder mehrere sich zwischen der Kupplungswelle (12) und einem Abschnitt des Schieberohres (17) erstreckenden Kanäle zu geleiten,
dass es sich bei dem Innenkanal um einen sich zwischen ihren zwei Enden in der Welle (12) erstreckenden Zentralkanal (100) handelt, wobei das dem Anbauteil (18) benachbarte Ende des Zentralkanals (100) verschlossen ist;
dass dabei ein Kanal (111) den Zentralkanal (100) mit einer sich zwischen dem Schieberohr (17) und der Außenfläche der Welle (12) erstreckenden Höhlung (112) verbindet, wobei dieser Kanal (111) ebenfalls Schmierstoff in eine Kammer (113) des Befestigungsteils (18) geleitet;
dass dabei ein Kanal (114) sich im Innenring der Wälzlager (50) zwischen der Kammer (113) und der Innenfläche der Wälzlager erstreckt, wobei dieser Kanal derart Schmierstoff zwischen die Wälzlagerpaare (50, 50bis) geleitet, dass der Schmierstoff aus den Wälzlagern (50, 50bis) austreten kann,
dass das System von direkt und/oder indirekt mit dem Innenkanal (100) der Kupplungswelle (12) verbundenen Kanälen und/oder Durchgängen einen oder mehrere Durchgänge umfasst, die dem Schmierstoff erlauben, nach seinem Durchlaufen mindestens des sich zwischen dem Befestigungsteil (18) und dem Schieberohr (17) erstreckenden Innenrings (50) aus der Übertragung mit variabler Einstellung (10) auszutreten, und
dass das System von direkt und/oder indirekt mit dem Innenkanal der Kupplungswelle (12) verbundenen Kanälen und/oder Durchgängen dazu hergerichtet ist, das Abfließen von Schmierstoff durch die von der Rotation der Kupplungswelle (12) erzeugte Zentrifugalkraft sicherzustellen.

## Claims

1. A four-stroke internal combustion motor comprising at least an intake phase, a compression phase, an expansion phase and an exhaust phase, said motor operating by self-ignition or controlled ignition comprising:
- a cylinder housing part (1) having a first series of cylinders (2) having each an axis and a diameter, and a second series of cylinders (3) having each an axis and a diameter, the cylinders (2) of the first series having a volume and a diameter larger than the volume and diameter of the cylinders (3) of the second series,
- pistons (6,8), each piston being adapted to be driven in a reciprocating movement in a cylinder and being associated with a connecting rod,
- two crankshaft lines having axes of rotation parallel to each other, a first crankshaft line (4) having a crank with a long stroke, while the second crankshaft line (5) has a crank with a short stroke less than the long stroke of the crank of the first crankshaft line, said crankshaft lines (4,5) being adapted to be coupled to the same rotation speed by means of a gear train (14,16) and a variably timed transmission (10);
wherein each piston being associated to a connecting rod (7,9) is operated with a crank of a crankshaft line, the crank with the short-stroke of the second crankshaft line (5) operating the connecting rod (9) of the piston (8) moving in the small cylinder (3), while the crank with the long-stroke of the first crankshaft line (4) operates the connecting rod (7) of the piston (6) moving in the great cylinder (2),
wherein the first series of cylinders (2) is arranged above the first crankshaft line (4), while the second series of cylinders (3) is arranged above the second crankshaft line (5),
wherein each cylinder (2) of the first series communicates with at least one cylinder (3) of the second series via a clearance so as to form a group of two cylinders (2,3) communicating with each other to allow gas passing from one cylinder to the other irrespective of the position of the pistons (6,8) moving in said cylinders (2,3),
the said motor including a fitting for the variably timed transmission (10), the said fitting being suitable to receive, at least partially, a control moving means governing the phase angle difference between the first and second crankshaft lines, the first and second crankshaft lines being associated with a first driving wheel and a second driving wheel respectively, while a driving means extends between the said first and second driving wheels,
in which the variably timed transmission (10) comprises an assembly separated from the shaft (13) of the crank with the small stroke (5), the variably timed transmission (10) being equipped with a bearing plate (15), which is fastened by centering in an orifice provided in the cylinder housing (1), the variably timed transmission comprising a shaft (12) including coupling means for coupling the said shaft (12) to the shaft of the crank with small stroke (5) or to the crank with large stroke, an end of the said shaft (12) displaying external splines, while the shaft (13) is provided with a means (20) or has a portion with a hollow with internal splines adapted for co-operating with the external splines of the shaft (12) to ensure a coupling of the shafts (12,13) to each other, while still permitting axial displacement between them, the variably timed transmission further comprising a tube or shaft (17) sliding axially in relation to the axis of rotation of the crankshaft line of the pistons of the cylinders of the first or second series, stop means to limit the travel of the variably timed transmission between a start and an end, a fixation piece (18) for attaching the sliding tube or shaft (17) to a control jack, and an internal ring (50) with a pair of bearings (50,50bis) extending between the fixation piece (18) and the sliding tube (17); the sliding tube or shaft (17) sliding in a sleeve (36) comprising on its inner periphery helicoidally splines (49) mated to the outer helicoidally splines (52) of the sliding tube (17);
in which the transmission shaft (12) displays an internal channel for feeding at least one lubricant between the said transmission shaft (12) and the sleeve (36),
**characterized in that** the variably timed transmission (10) comprises a system with channels and/or passages connected directly or indirectly to the internal channel (100) of the transmission shaft (12) to feed lubricant to the internal ring (50) extending between the fixation piece (18) and the sliding tube (17), as well as within one or more channels extending between the transmission shaft (12) and a part of the sliding tube (17),
**in that** the internal channel has an internal channel (100) extending in the shaft (12) between its two ends, the end of the central channel (100) adjacent to the fixation piece (18) being sealed;
**in that** a first channel (111) connects the central channel (100) to a hollow (112) extending between the sliding tube (17) and the outer face of the shaft (12), said channel (111) feeding also lubricant in a chamber (113) of the fixation piece (18);
**in that** a second channel (114) extends in the inner ring of the bearings (50) between the chamber (113) and the inner face of the bearings, this channel feeding lubricant between the pairs of bearings(50,50bis), lubricant being able to escape from the bearings (50,50bis);
**in that** the system of channels and/or passages connected directly and/or indirectly to the inner channel (100) of the transmission shaft (12) comprises one or more passages enabling the lubricant to escape outside the variably timed transmission (10) after the passage of lubricant at least through the inner ring (50) extending between the fixation piece (18) and the sliding tube (17), and
**in that** the system of channels and/or passages connected directly and/or indirectly to the inner channel of the transmission shaft (12) is adapted to ensure the flow of lubricant by the centrifugal force created by the rotation of the transmission shaft (12).

2. The motor of claim 1, wherein for each group of group of cylinders communicating to each other by a channel, the axis of a cylinder of the first series of the group in question forms with a line parallel to the axis of rotation of a crankshaft line a first plane, while the axis of the cylinder of the second series of the group in question forms with a line parallel to the axis of rotation of the crankshaft line a second plane, **characterized in that** the said planes define there between an angle between 1° and 60°, advantageously between 10° and 50°, preferably between 15° and 45°, the axis of the cylinders of each group of cylinders intersecting the one with the other advantageously substantially at a point belonging to a same line.

3. The motor of claim 2, wherein a plane is defined by the axes of rotation of the first and second crankshaft lines, and wherein a median plane is defined between said first and second planes, the said median plane of a group of cylinders is substantially perpendicular to the plane defined by the axes of rotation of the first and second crankshaft lines.

4. The motor of anyone of the preceding claims, **characterized in that** it comprises a camshaft in mesh, at half speed, with the first crankshaft line (4) for ensuring periodic communication of the groups of two cylinders (2,3) with inlet and exhaust pipes by means of intake and exhaust valves at predetermined moments of the four stroke cycle.

5. The motor according to claim 4 wherein a flywheel is mounted on the shaft of the crankshaft line with large stroke (4), while the variably timed transmission (10) is connected to the shaft of the crankshaft line with small stroke (5), **characterized in that** the shafts of the two crankshafts (4,5) are adapted so that the variably timed transmission (12) is located next to the engine flywheel (26), the control moving means of the variably timed transmission (10) comprising advantageously a control jack in direct drive, to control the phase angle difference between the crankshaft line with small stroke (5) and the crankshaft line with large stroke (4).

6. The motor according to any one of the preceding claims, **characterized in that** the shaft (13) is associated with a bearing journal (20) having internal splines co-operating with the external splines of the transmission shaft (12), and
**characterized in that** advantageously for reinforcing the axial rigidity between the crankshaft line with short stroke (5) and the variably timed transmission (10), the shafts (12,13) are merged into a single shaft, so as to enable the transmission shaft (35) comprising the wheel (40) and the straight splines (47) are associated with the crank with short stroke (5), the distance separating the fixation supports of the wheel (40) and the bearing plate (15) being advantageously such at the same distance separating the fixation of the cylinder housing (1) of the bearing plate (15) and the fixation support of the wheel (40) when the crankshaft with small stroke is inserted in the bearing plates of the cylinder housing.

7. The motor according to any one of the preceding claims, **characterized in that** it comprises an engine flywheel (26) axed and fixed on the end of the crankshaft line (4) of the pistons of the cylinders of the first series, said engine flywheel being located advantageously in a coupling housing (31), the variably timed transmission (10) being advantageously axed on the end of the shaft of the crank with short stroke adjacent to the engine flywheel (26), while the engine comprises preferably in the coupling housing (31), a transmission with gear train between the shaft (5) of the pistons of the second series and the engine flywheel (26) via the variably timed transmission (10).

8. The motor according to anyone of the preceding claims, **characterized in that** it comprises a control jack controlling the axial displacement of the sliding tube or of the sliding shaft (17), said control jack being associated with stop means for limiting the displacement between said start and end of travel, said control jack being advantageously fixed on a support provided on a closing cover (23) of the coupling housing (31) adjacent to the engine flywheel (26).

9. The motor of anyone of the preceding claims, **characterized in that** the shafts of the two crankshafts (4,5) are associated with gears (14,16) in direct drive, the shafts rotating in opposite directions of rotation and at the same speed, the shafts of the two crankshafts (4,5) being advantageously coupled to each other by a set of two intermediate coupling gears disposed between the two gears (14,16) mounted on the shafts, so that they rotate in opposite directions of rotation and at the same speed, while the two intermediate gears located between the said gears (14,16) mounted on the shafts of the first and second crankshaft lines are preferably arranged and coupled to each side of a plane passing through the axes of the two shafts of the two crankshafts (4,5).

10. The motor according to anyone of the preceding claims, **characterized in that** the variably timed transmission comprises a system of channels and/or passages comprising at least one or more of the following channels, advantageously several following channels or passages:
- a channel (101) (advantageously radial) extending between the central channel (100) and one or a plurality of splines of the coupling end (12bis) of the shaft (12); and/or
- a groove (102) extending between the coupling means (12bis) and the bearing (40), this groove being suitable to receive the lubricant expelled from the splines during an axial movement within a recess with spline of an end of a camshaft; and/or
- a channel (103) to feed lubricant from the central channel (100) towards the end of the sliding tube (17) turned towards the camshaft of the engine, this channel actually feeding lubricant into a doughnut-shaped chamber (104) displaying a doughnut-shaped groove (105) located, at least partially, at a cylindrical level in relation to the axis of the shaft (12) located under the internal cylindrical face of the tube (17); and/or
- a channel (106) linking a doughnut-shaped chamber (105) to a doughnut-shaped chamber (107), intended to feed lubricant to the level of the bearing (43); and/or
- a flared channel (108) for increasing the lubricant's speed, linking the bearing (43) to a distribution chamber (109) distributing lubricant at the level of the bearings (39) of a bearing plate (15), the distribution chamber (109) displaying an outlet (110) feeding lubricant between a part of the bearing plate (15) and a part of the bearing (40), lubricant being able to escape from the bearing (39) between the bearing plate (15) and the gearing (14).

11. The motor according to anyone of the preceding claims, **characterized in that** the variably timed transmission comprises a lubrication system comprises a system of channels and/or passages comprising at least the following channels and passages:
- a channel (101) (advantageously radial) extending between the central channel (100) and one or a plurality of splines of the coupling end (12bis) of the shaft (12); and
- a groove (102) extending between the coupling means (12bis) and the bearing (40), this groove being suitable to receive the lubricant expelled from the splines during an axial movement within a recess with spline of an end of a camshaft; and
- a channel (103) to feed lubricant from the central channel (100) towards the end of the sliding tube (17) turned towards the camshaft of the engine, this channel actually feeding lubricant into a doughnut-shaped chamber (104) displaying a doughnut-shaped groove (105) located, at least partially, at a cylindrical level in relation to the axis of the shaft (12) located under the internal cylindrical face of the tube (17); and
I
- a channel (106) linking a doughnut-shaped chamber (105) to a doughnut-shaped chamber (107), intended to feed lubricant to the level of the bearing (43); and
- a flared channel (108) for increasing the lubricant's speed, linking the bearing (43) to a distribution chamber (109) distributing lubricant at the level of the bearings (39) of a bearing plate (15), the distribution chamber (109) displaying an outlet (110) feeding lubricant between a part of the bearing plate (15) and a part of the bearing (40), lubricant being able to escape from the bearing (39) between the bearing plate (15) and the gearing (14).

12. Engine or apparatus or machine comprising at least a motor according to anyone of the claims 1 to 11.

13. Variably timed transmission as defined in anyone of the claims 1 to 11, for a motor according to anyone of the claims 1 to 11, said transmission (10) equipped with a bearing plate (15) adapted to be fastened by centering in an orifice provided in the cylinder housing (1) comprising a shaft (12) including coupling means for coupling the said shaft (12) to the shaft of the crank with small stroke (5) or to the crank with large stroke, an end of the said shaft (12) displaying external splines, while the shaft (13) is provided with a means (20) or has a portion with a hollow with internal splines adapted for co-operating with the external splines of the shaft (12) to ensure a coupling of the shafts (12,13) to each other, while still permitting axial displacement between them, the variably timed transmission further comprising a tube or shaft (17) sliding axially in relation to the axis of rotation of the crankshaft line of the pistons of the cylinders of the first or second series, stop means to limit the travel of the variably timed transmission between a start and an end, a fixation piece (18) for attaching the sliding tube or shaft (17) to a control jack, and an internal ring (50) with a pair of bearings (50,50bis) extending between the fixation piece (18) and the sliding tube (17); the sliding tube or shaft (17) sliding in a sleeve (36) comprising on its inner periphery helicoidally splines (49) mated to the outer helicoidally splines (52) of the sliding tube (17);
in which the transmission shaft (12) displays an internal channel for feeding at least one lubricant between the said transmission shaft (12) and the sleeve (36),
**characterized in that** the variably timed transmission (10) comprises a system with channels and/or passages connected directly or indirectly to the internal channel (100) of the transmission shaft (12) to feed lubricant to the internal ring (50) extending between the fixation piece (18) and the sliding tube (17), as well as within one or more channels extending between the transmission shaft (12) and a part of the sliding tube (17),
**in that** the internal channel has an internal channel (100) extending in the shaft (12) between its two ends, the end of the central channel (100) adjacent to the fixation piece (18) being sealed;
**in that** a first channel (111) connects the central channel (100) to a hollow (112) extending between the sliding tube (17) and the outer face of the shaft (12), said channel (111) feeding also lubricant in a chamber (113) of the fixation piece (18);
**in that** a second channel (114) extends in the inner ring of the bearings (50) between the chamber (113) and the inner face of the bearings, this channel feeding lubricant between the pairs of bearings (50,50bis), lubricant being able to escape from the bearings (50,50bis);
**in that** the system of channels and/or passages connected directly and/or indirectly to the inner channel (100) of the transmission shaft (12) comprises one or more passages enabling the lubricant to escape outside the variably timed transmission (10) after the passage of lubricant at least through the inner ring (50) extending between the fixation piece (18) and the sliding tube (17), and
**in that** the system of channels and/or passages connected directly and/or indirectly to the inner channel of the transmission shaft (12) is adapted to ensure the flow of lubricant by the centrifugal force created by the rotation of the transmission shaft (12).
